# EUROPEAN PATENT SPECIFICATION

(11) **EP 1 127 459 B1**
(45) Date of publication and mention of the grant of the patent: **10.09.2003**
(21) Application number: 99971610.3
(22) Date of filing: 27.10.1999
(51) Int. Cl.: H04N 7/088

(54) **TELETEXT TO HYPERTEXT MARKUP LANGUAGE ENCODER**
TELETEXT-ZU-HTML-KODIERER
CODAGE DE DONNEES TELETEXTE EN LANGAGE HYPERTEXTE

(30) Priority: 04.11.1998 US 186175
(43) Date of publication of application: 29.08.2001
(73) Proprietor: Gateway, Inc., North Sioux City, SD 57049-2000 (US)
(72) Inventor: WUGOFSKI, Theodore, D., Fort Worth, Texas 76109 (US)
(74) Representative: Beresford, Keith Denis Lewis
(86) International application number: US9925237
(87) International publication number: WO00027116

(56) References cited:
- EP-A- 0 723 369
- PATENT ABSTRACTS OF JAPAN vol. 1999, no. 05, 31 May 1999 (1999-05-31) & JP 11 032314 A (MATSUSHITA ELECTRIC IND CO LTD), 2 February 1999 (1999-02-02)

## Description

### Field of the Invention

The present invention relates generally to the field of conversion of data, and more specifically to the conversion of teletext data to Hypertext Markup Language (HTML) code.

### Background of the Invention

Teletext is a data service used widely in Europe. Teletext and other non-audio and - video signals are transmitted in the vertical blanking interval (VBI) of the television transmission. Video signals, audio signals, and other signals are transmitted in what is known as in-band data transmission. Each set of signals has its own bandwidth in the television transmission. Such other signals include data services providing electronic programming guides (EPG), stock quotes, sports scores, news and information, headlines, and other related content. Transmission characteristics and details for transmissions in the VBI are well known and will not be described further herein.

Televisions using the teletext technology receive teletext transmissions and display the received messages in a number of formats, including the display of constructed pages of information. A user interface is displayed on the television screen using simple, character-based graphics. Navigation to and from teletext pages is accomplished by directly entering a page number displayed in the television screen from a list of numbers provided on the screen. The choice of page number is used by the television to direct the viewer to the desired teletext page. More advanced navigation through various teletext pages may be accomplished through the use of a number of colored buttons on a remote control for the television, with each colored button corresponding to a color-coded page choice on the teletext page. Navigation to another teletext page is accomplished by pressing the appropriately colored button.

Teletext pages are loaded into the display as the instructions to move to the page are completed. Because of this, delays in loading and converting teletext pages may be significant. It would be desirable to be able to more quickly navigate between teletext pages. It would also be desirable to allow teletext pages to be viewed and used in other formats.

WO-A-8802973 discloses a teletext receiving system in which a buffer memory stores a sequence of related teletext pages to allow the sequence of teletext pages to be sequentially displayed when a "next page" button is actuated. When a teletext page is initially selected by a user entering the page number, reference is made to a stored table to identify related teletext pages to be entered in the buffer memory in readiness for sequential display. The table is transmitted in a separate teletext page and stored in an intermediate memory of the system.

EP-A-0723369 discloses a server capable of converting teletext information to HTML form for making the information available via the Internet. Conversion is also possible from HTML to teletext form for transmission of Internet accessed information to user terminals which can display teletext information but do not include a computer capable of processing HTML.

Aspects of the present invention are set out in the appended claims.

An embodiment of the present invention overcomes the problems of the prior art by providing a method and apparatus for converting teletext to HTML, and for the display and navigation of teletext information using a computer. An exemplary embodiment of the teletext to HTML encoder detects teletext page links in a teletext transmission or page, converts the pages to an HTML page, and converts the teletext page links to HTML links to another page. A click of a pointing device such as a mouse allow the user to immediately retrieve a desired next page of information.

In one embodiment, page numbers are detected through pattern matching. Upon retrieval of the original teletext page, conversion to HTML allows the pre-loading of the linked pages, so that viewing the next page may be done more quickly. The converted HTML pages are cached or stored for retrieval upon demand. Similarly, previous pages are stored for re-viewing later.

A further embodiment of the method of the invention includes receiving a teletext message from the VBI of a television transmission, storing the received teletext message in a memory, constructing a teletext page from the stored teletext message, determining if the generated teletext page has already been generated and stored, searching the generated teletext page for references to other teletext pages, converting the teletext page to HTML code, and storing the converted page.

Optionally, an embodiment of the present invention can store teletext pages and HTML pages in memory for later retrieval. Further, an alternative embodiment of the present invention can compare generated HTML or received teletext pages with previously stored pages to see if a match already exists, saving more time in the process.

A page identifier routine embodiment of the present invention allows the process of identifying a page stored in memory. The pages stored in memory may be either received teletext pages, converted HTML pages, or both. Storage of pages provides the invention the opportunity to cache or pre-load pages for faster use by the user. The storage of pages also allows the encoder to examine received pages to see if they are new or old. If the page is old and unchanged, there is no need to store the received page.

### Brief Description of the Drawings

Figure 1 is a flowchart diagram of an embodiment of the present invention;
Figure 2 is a diagram of an alternative embodiment of the present invention;
Figure 3 is a diagram of another alternative embodiment of the present invention;
Figure 4 is a block diagram of a representative apparatus embodiment of the present invention;
Figure 5 is a flowchart diagram of another embodiment of the present invention; and
Figure 6 is a block diagram of a typical computer configuration on which embodiments of the present invention may be used.

### Description of Embodiments

In the following detailed description of the embodiments, reference is made to the accompanying drawings which form a part hereof, and in which is shown by way of illustration specific embodiments in which the invention may be practiced. It is to be understood that other embodiments may be utilized and structural changes may be made without departing from the scope of the present invention.

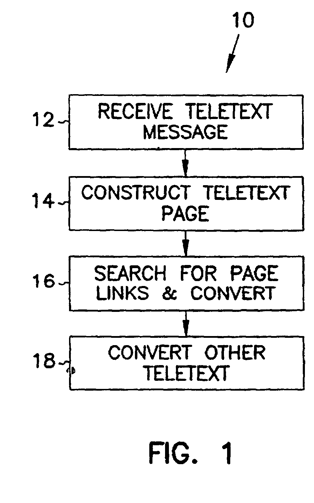

Referring now to the drawings, an exemplary embodiment of the method of teletext to HTML encoding 10 may be seen in flowchart in Figure 1. A teletext message is received in block 12, and a teletext page is constructed in block 14. The constructed teletext page is searched for references or links to other pages and those links are converted to HTML code in block 16. The teletext page is converted to HTML code including the HTML links to any other pages referenced by the constructed teletext page in block 18. The flowchart, and other flowcharts herein may be performed by software in the form of modules and/or objects written in any suitable programming language. Portions of such methods may also be implemented in firmware, hardware, or any combination thereof. Software may be stored on any computer readable media, including but not limited to diskette, CD, hard drive, and the like. While method 10 is described as including the receipt of the teletext message in block 12, it should be understood that the method also contemplates acting on an already received message.

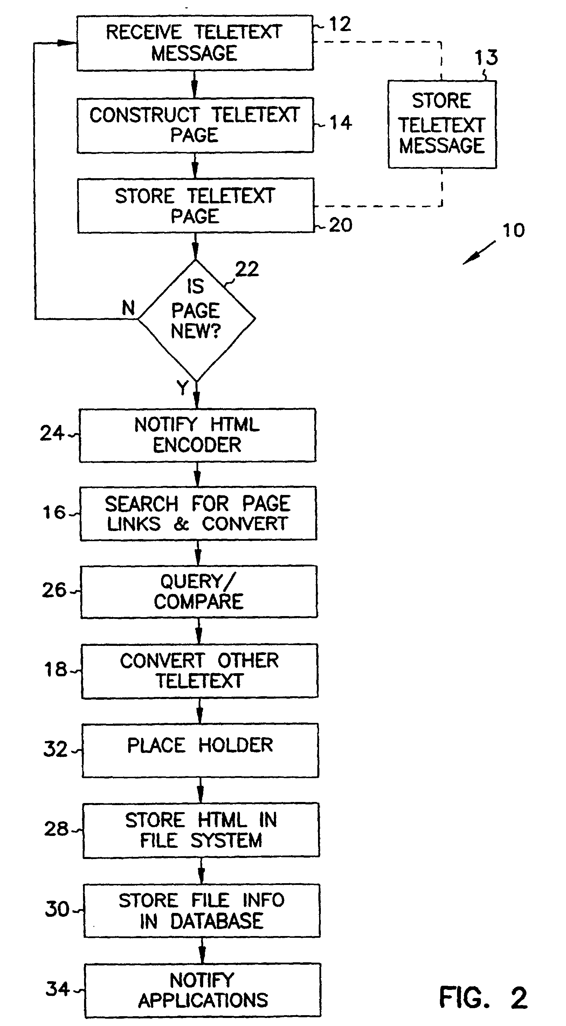

The method shown in Figure 1 may be enhanced by a number of optional functions shown in Figure 2. These functions include storing the received teletext message in a memory or register (block 13), storing the constructed teletext pages in a file system (block 20), determining whether the constructed page is new or has already been received by comparing previously stored teletext pages to the constructed teletext page (block 22), notifying the HTML encoder if the constructed page is new (block 24), querying the database or other storage medium for comparing previously stored HTML pages to the generated HTML page (block 26), and storing the generated HTML file in a file system (block 28).

Further functions may be included with the method of Figures 1 and 2. These functions include storing file information about the generated HTML files in the database or other storage medium (block 30), generating and keeping a place holder within the database or other storage medium for the HTML file which is to be generated (block 32), and notifying external applications using the HTML encoded pages that a new HTML page is available (block 34).

The comparison of pages to determine whether a page is new may be accomplished either by comparing the constructed teletext page with stored teletext pages (block 22), or by comparing the converted HTML page to stored HTML pages (block 26). This comparison is done in order to potentially reduce the time required for a process of conversion of teletext messages to HTML code. If a teletext page is received, but that page has already been received, stored, checked for references to other pages, and converted into HTML code, there is no need for any attempt to re-store or re-convert the page. Such a process would be a waste of valuable time, since an excess amount of writing may be required to redo tasks that have already been accomplished.

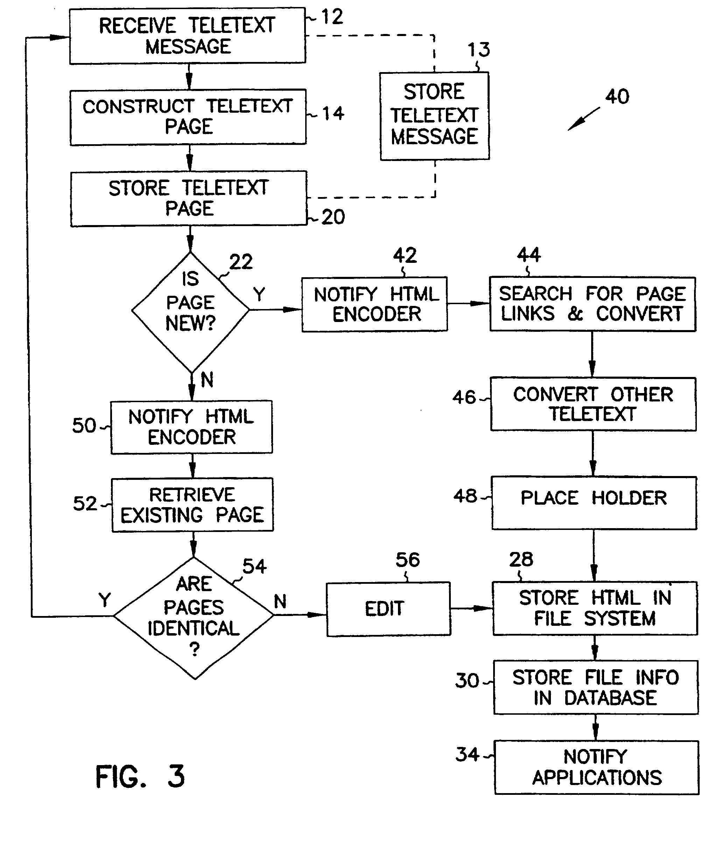

Yet another alternative embodiment 40 of the present invention is shown in Figure 3. Process 40 comprises many of the same functions of method 10 as shown in Figures 1 and 2, and identical steps in process 40 will use identical reference numerals. In process 40, a teletext message is received in block 12, and a valid teletext page is constructed in block 14. The teletext message is optionally stored in a memory or register in block 13. The constructed page is optionally stored in a database or other storage medium in block 20. In block 22, the process 40 determines whether the constructed page is new by comparing the constructed page with previously stored teletext pages. If the constructed page is new, the HTML encoder is notified in block 42. In block 44, the received page is searched for links or references to other teletext pages, and in block 46, the constructed teletext page is converted to HTML code. In block 48, a place holder is generated and stored in the database or other storage medium for the HTML file which is to be generated. The generated HTML file is stored in a file system in block 28, information about the generated file is stored in the database or other storage medium in block 30, and any external applications using the HTML encoded pages are notified that a new HTML page is available in block 34.

If the constructed teletext page is not new, as determined by block 22, the HTML encoder is notified in block 50. In block 52, the process 40 loads or retrieves the HTML page corresponding to the constructed teletext page from the database or other storage medium. In block 54, the retrieved HTML page and the teletext page are compared to determine if they are identical. If the pages are identical, no further action is taken. If the pages differ, the retrieved HTML page is edited in block 56 to update the retrieved HTML page. Optionally, instead of editing the retrieved HTML page, the constructed changed teletext page may be reformatted. The generated HTML file is stored in a file system in block 28, information about the generated file is stored in the database or other storage medium in block 30, and any external applications using the HTML encoded pages are notified that a new HTML page is available in block 34.

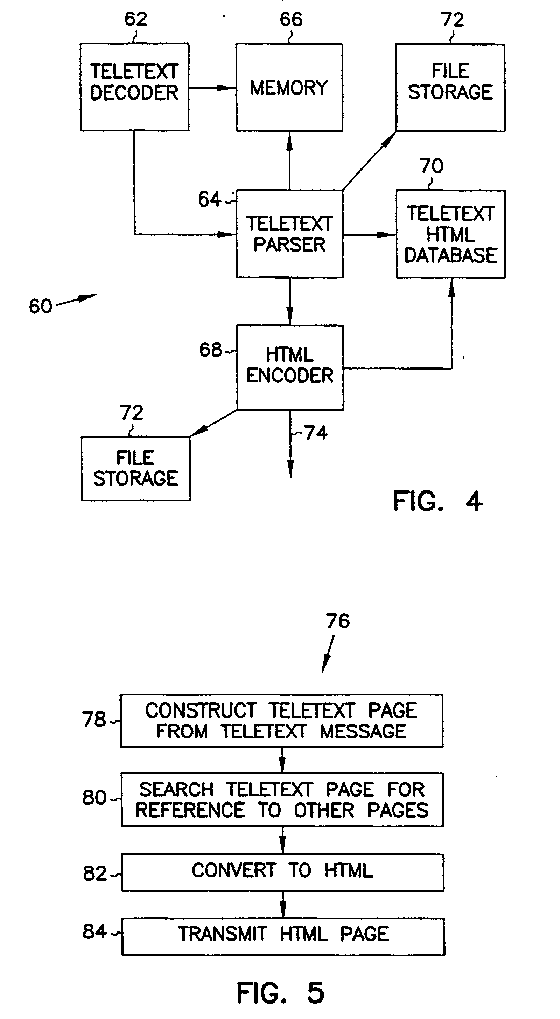

An embodiment of a teletext to HTML encoder 60 is shown in block diagram in Figure 4. A teletext receiver/decoder 62 is coupled to a teletext parser 64 and a memory or other storage medium 66 for storing teletext messages received by receiver/decoder 62. Teletext parser 64 is also coupled to memory 66 for retrieval of stored information from memory 66. Teletext parser 64 is in turn coupled to HTML encoder 68 and to database 70. Database 70 and HTML encoder 68 are also coupled for communication and transfer of information therebetween. File system storage 72 is accessible by teletext parser 64 and by HTML encoder 68, for storage and retrieval of constructed teletext and converted HTML pages. HTML encoder is capable of generating a signal at a signal output 74 which will serve to notify computer applications which use the HTML files generated by teletext to HTML encoder 60 that a new page has been received and converted to HTML, and is available for use by the applications.

The interconnection of the components of teletext to HTML encoder 60 allow the transfer of data and files between the various components which are in data transfer communicative relationship is well known in the art and will not be described further herein. It should be understood that the connection configuration may be varied and modified by one skilled in the art, and that such modification and variation are within the scope of the invention.

In yet another embodiment of the present invention shown in Figure 5, a method 76 of transmitting a teletext message as HTML code comprises constructing at least one teletext page from a teletext message in block 78, searching the at least one constructed teletext page for references to other teletext pages in block 80, converting each constructed teletext page to an HTML page including HTML links to any other teletext pages in the teletext message in block 82, and transmitting the converted HTML page in block 84. In this embodiment, the conversion of the teletext message is performed at the head end of the method, prior to transmission. The message is transmitted in HTML form. Further functions such as those shown above in Figure 2 may be added to the embodiment shown in Figure 5.

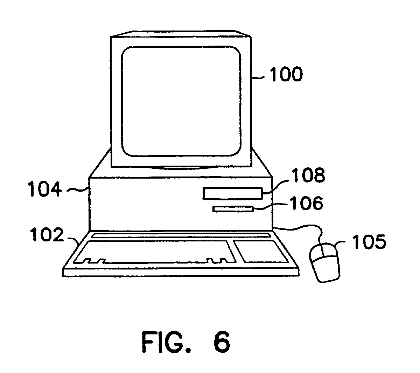

Personal computers, as shown in Figure 6, typically include a monitor 100, keyboard input 102, central processing unit 104, and a pointing or selection device such as mouse 105. Further components of a typical computer system may include a machine readable storage media such as disk drive 106, hard disk, CD-ROM 108, DVD, modem, and the like. The processor unit of such a computer typically includes a microprocessor, memory (RAM), and other peripheral circuitry. The software implementing the various embodiments of the present invention may be implemented by computer programs of machine-executable instructions written in any number of suitable languages and stored on machine or computer readable media such as disk, diskette, RAM, ROM, or other device commonly included in a personal computer.

## Claims

1. A method of processing teletext information to facilitate the display of pages of information and the navigation between the pages, the method comprising the steps of:
receiving (12) a teletext message;
decoding the teletext message and constructing (14) a set of teletext pages for displaying information and teletext page links indicating operator instructions for navigation between the teletext pages of the set; and
storing data for retrieval and display;
**characterised by**:
before the storing step, converting (16) the teletext pages into said data in the form of HTML pages for displaying information corresponding to that of respective teletext pages and containing HTML links corresponding to the teletext page links for navigation between the HTML pages.

2. A method as described in claim 1, and further comprising:
storing (13) the received message.

3. A method as described in claim 2, and further comprising:
comparing (26) each converted HTML page to any previously stored HTML pages to identify any previously stored HTML pages corresponding to the converted HTML page.

4. A method as described in claim 3, and further comprising:
retrieving (52) a previously stored HTML page identified as corresponding to the converted HTML page; and
editing (56) the retrieved HTML page to conform the retrieved HTML page to the converted HTML page.

5. A method as described in claim 1, and further comprising:
storing (20) the constructed teletext pages.

6. A method as described in claim 5, and further comprising:
comparing (22) the constructed teletext page to previously stored teletext pages to determine whether the constructed teletext page must be stored.

7. A method as described in claim 1, and further comprising:
determining (22) if each constructed teletext page is new.

8. A method as described in claim 1, and further comprising:
determining if each converted HTML page is new.

9. A method as claimed in any preceding claim, comprising:
storing the converted HTML pages in an HTML file; and
storing (28) the HTML file in a file system.

10. A method as described in claim 9, and further comprising:
storing (30) information about each converted HTML file in a database.

11. A method as described in claim 10, and further comprising:
retrieving (52) a previously stored HTML page corresponding to the constructed teletext page if the constructed page is not new; and
editing (56) the retrieved HTML page to conform the retrieved HTML page to the converted HTML page.

12. A method as described in claim 9, and further comprising:
notifying (52) an HTML engine if the constructed teletext page is new.

13. Apparatus for processing teletext information to facilitate the display of pages of information and the navigation between the pages, the apparatus comprising:
a teletext receiver for receiving a teletext message;
a decoder (62) for decoding the teletext message and constructing a set of teletext pages for displaying information and teletext page links indicating operator instructions for navigation between the teletext pages of the set; and
a memory (66) for storing data for retrieval and display;
**characterised by** comprising:
an HTML encoder (68) for converting the teletext pages into said data in the form of HTML pages for displaying information corresponding to that of respective teletext pages and containing HTML links corresponding to the teletext page links for navigation between the HTML pages.

14. Apparatus as described in claim 13, and further comprising:
means for storing the teletext message in the memory.

15. Apparatus as described in claim 13, and further comprising:
a file system (70, 72) for storage of converted HTML pages for later retrieval.

16. A machine readable medium comprising machine readable instructions for causing a computer to perform a method as claimed in any of claims 1 to 12.

## Patentansprüche

1. Verfahren zum Verarbeiten von Teletext-Informationen zur Erleichterung der Darstellung von Informationsseiten und des Navigierens zwischen den Seiten, wobei
eine Teletextnachricht empfangen wird (12),
die Teletextnachricht decodiert und ein Satz von Teletextseiten erstellt wird (14), um Informationen und Teletextseiten-Links darzustellen, die Bedieneranweisungen zum Navigieren zwischen Teletextseiten des Satzes angeben, und
Daten zur Wiedergewinnung und Darstellung gespeichert werden,
**dadurch gekennzeichnet, daß** vor dem Speichern die Teletextseiten in die Daten in Form von HTML-Seiten konvertiert werden (16), um Informationen darzustellen, die denen der jeweiligen Teletextseiten entsprechen und HTML-Links entsprechend den Teletextseiten-Links zum Navigieren zwischen den HTML-Seiten enthalten.

2. Verfahren nach Anspruch 1, wobei die empfangene Nachricht gespeichert wird (13).

3. Verfahren nach Anspruch 2, wobei jede konvertierte HTML-Seite mit etwaigen vorher gespeicherten HTML-Seiten verglichen wird (26), um etwaige vorher gespeicherte HTML-Seiten zu identifizieren, die der konvertierten HTML-Seite entsprechen.

4. Verfahren nach Anspruch 3, wobei
eine vorher gespeicherte HTML-Seite, die als der konvertierten HTML-Seite entsprechend identifiziert wurde, wiedergewonnen wird (52), und
die wiedergewonnene HTML-Seite so editiert wird (56), daß sie an die konvertierte HTML-Seite angepaßt ist.

5. Verfahren nach Anspruch 1, wobei die erstellten Teletextseiten gespeichert werden (20).

6. Verfahren nach Anspruch 5, wobei die erstellte Teletextseite mit den vorher gespeicherten Teletextseiten verglichen wird (22), um festzustellen, ob sie gespeichert werden muß.

7. Verfahren nach Anspruch 1, wobei festgestellt wird (22), ob die jeweilige erstellte Teletextseite neu ist.

8. Verfahren nach Anspruch 1, wobei festgestellt wird, ob die jeweilige konvertierte HTML-Seite neu ist.

9. Verfahren nach einem der vorhergehenden Ansprüche, wobei
die konvertierten HTML-Seiten in eine HTML-Datei konvertiert werden, und
die HTML-Datei in einem Dateisystem abgespeichert wird (28).

10. Verfahren nach Anspruch 9, wobei Informationen bezüglich der jeweiligen konvertierten HTML-Datei in einer Datenbank abgespeichert werden (30).

11. Verfahren nach Anspruch 10, wobei
dann, wenn die erstellte Seite nicht neu ist, eine vorher gespeicherte HTML-Seite, die der erstellten Teletextseite entspricht, wiedergewonnen wird (52) und
die wiedergewonnene HTML-Seite so editiert wird (56), daß sie an die konvertierte HTML-Seite angepaßt ist.

12. Verfahren nach Anspruch 9, wobei eine HTML-Maschine benachrichtigt wird (52), wenn die erstellte Teletextseite neu ist.

13. Vorrichtung zum Verarbeiten von Teletext-Informationen zur Erleichterung der Darstellung von Informationsseiten und des Navigierens zwischen den Seiten, mit
einem Teletext-Empfänger zum Empfangen einer Teletextnachricht,
einem Decoder (52) zum Decodieren der Teletextnachricht und Erstellen eines Satzes von Teletextseiten zur Darstellung von Informationen und Teletextseiten-Links, die Bedieneranweisungen zum Navigieren zwischen den Teletextseiten des Satzes angeben, und
einem Speicher (66) zum Speichern von Daten zur Wiedergewinnung und Darstellung,
**gekennzeichnet durch** einen HTML-Codierer (68) zum Konvertieren der Teletextseiten in die Daten in Form von HTML-Seiten zum Darstellen von Informationen, die denen der jeweiligen Teletextseiten entsprechen und HTML-Links entsprechend den Teletextseiten-Links zum Navigieren zwischen den HTML-Seiten enthalten.

14. Vorrichtung nach Anspruch 13 mit einer Einrichtung zum Abspeichern der Teletextnachricht in dem Speicher.

15. Vorrichtung nach Anspruch 13 mit einem Dateisystem (70, 72) zur Speicherung konvertierter HTML-Seiten zur späteren Wiedergewinnung.

16. Maschinenlesbares Medium mit maschinenlesbaren Instruktionen, die bewirken, daß ein Computer ein Verfahren nach einem der Ansprüche 1 bis 12 ausführt.

## Revendications

1. Procédé pour traiter des informations télétexte afin de faciliter l'affichage de pages d'informations et la navigation entre les pages, le procédé comprenant les étapes consistant à :
recevoir (12) un message télétexte ;
décoder le message télétexte et construire (14) un ensemble de pages télétexte pour afficher des informations et des liens de pages télétexte, indiquant des instructions d'opérateur pour la navigation entre les pages télétexte de l'ensemble ; et
stocker des données pour l'extraction et l'affichage ;
**caractérisé par** :
avant l'étape de stockage, la conversion (16) des pages télétexte en lesdites données sous la forme de pages HTML pour l'affichage d'informations correspondant à celles de pages télétexte respectives et contenant des liens HTML correspondant aux liens de pages télétexte pour la navigation entre les pages HTML.

2. Procédé selon la revendication 1, comprenant en outre :
le stockage (13) du message reçu.

3. Procédé selon la revendication 2, comprenant en outre :
la comparaison (26) de chaque page HTML convertie à l'une quelconque des pages HTML précédemment stockées pour identifier d'éventuelles pages HTML précédemment stockées correspondant à la page HTML convertie.

4. Procédé selon la revendication 3, comprenant en outre :
l'extraction (52) d'une page HTML précédemment stockée identifiée comme correspondant à la page HTML convertie ; et
la modification (56) de la page HTML extraite pour faire en sorte que la page HTML extraite soit conforme à la page HTML convertie.

5. Procédé selon la revendication 1, comprenant en outre :
le stockage (20) des pages télétexte construites.

6. Procédé selon la revendication 5, comprenant en outre :
la comparaison (22) de la page télétexte construite à des pages télétexte précédemment stockées pour déterminer si la page télétexte construite doit être stockée.

7. Procédé selon la revendication 1, comprenant en outre :
le fait de déterminer (22) si chaque page télétexte construite est nouvelle.

8. Procédé selon la revendication 1, comprenant en outre :
le fait de déterminer si chaque page HTML convertie est nouvelle.

9. Procédé selon l'une quelconque des revendications précédentes, comprenant :
le stockage des pages HTML converties dans un fichier HTML ; et
le stockage (28) du fichier HTML dans un système de fichiers.

10. Procédé selon la revendication 9, comprenant en outre :
le stockage (30) d'informations concernant chaque fichier HTML converti dans une base de données.

11. Procédé selon la revendication 10, comprenant en outre :
l'extraction (52) d'une page HTML précédemment stockée correspondant à la page télétexte construite si la page construite n'est pas nouvelle ; et
la modification (56) de la page HTML extraite afin que la page HTML extraite soit conforme à la page HTML convertie.

12. Procédé selon la revendication 9, comprenant en outre :
le fait d'indiquer (52) à un moteur HTML si la page télétexte construite est nouvelle.

13. Appareil pour traiter des informations télétexte afin de faciliter l'affichage de pages d'informations et la navigation entre les pages, l'appareil comprenant :
un récepteur télétexte pour recevoir un message télétexte ;
un décodeur (62) pour décoder le message télétexte et construire un ensemble de pages télétexte pour afficher des informations et des liens de pages télétexte indiquant des instructions d'opérateur pour la navigation entre les pages télétexte de l'ensemble ; et
une mémoire (66) pour stocker des données pour l'extraction et l'affichage ;
**caractérisé par le fait qu'**il comprend :
un codeur HTML (68) pour convertir les pages télétexte en lesdites données sous la forme de pages HTML pour l'affichage d'informations correspondant à celles de pages télétexte respectives et contenant des liens HTML correspondant aux liens de pages télétexte pour la navigation entre les pages HTML.

14. Appareil selon la revendication 13, comprenant en outre :
un moyen pour stocker le message télétexte dans la mémoire.

15. Appareil selon la revendication 13, comprenant en outre :
un système de fichiers (70, 72) pour stocker des pages HTML converties en vue d'une extraction ultérieure.

16. Support lisible par une machine comprenant des instructions lisibles par une machine pour faire en sorte qu'un ordinateur exécute un procédé selon l'une quelconque des revendications 1 à 12.
